# EUROPÄISCHE PATENTSCHRIFT

(11) **EP 1 281 997 B1**
(45) Veröffentlichungstag und Bekanntmachung des Hinweises auf die Patenterteilung: **12.09.2007**
(21) Anmeldenummer: 02102013.6
(22) Anmeldetag: 09.07.2002
(51) Int. Cl.: G02B 21/00

(54) **Scanmikroskop**
Scanning microscope
Microscope de balayage

(30) Priorität: 30.07.2001 DE 10137154
(43) Veröffentlichungstag der Anmeldung: 05.02.2003
(73) Patentinhaber: Leica Microsystems CMS GmbH, 35578 Wetzlar (DE)
(72) Erfinder: Birk, Holger, Dr., 74909 Meckesheim (DE); Engelhardt, Johann,Dr., 76669 Bad Schönborn (DE)

(56) Entgegenhaltungen:
- EP-A- 1 085 362
- DE-A- 19 859 314
- DE-A- 19 906 757

## Beschreibung

Die Erfindung betrifft ein Scanmikroskop, das einen Beleuchtungs- und einen Detektionsstrahlengang festlegt, mit einem Objektiv, das sowohl im Beleuchtungs- und im Detektionsstrahlengang angeordnet ist.

In der Scanmikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahles wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Das Beleuchtungslicht wird über einen Strahlteiler eingekoppelt. Das vom Objekt kommende Fluoreszenz- oder Reflexionslicht passiert den Strahlteiler und gelangt anschließend zu den Detektoren.

Speziell in der konfokalen Scanmikroskopie wird ein Objekt mit dem Fokus eines Lichtstrahles in drei Dimensionen abgetastet.

Ein konfokales Scanmikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahles zu einem dreidimensionalen Bild führt. Meist wird ein dreidimensionales Bild durch schichtweise Bilddatennahme erzielt.

Aus der Offenlegungsschrift Leica DE 199 06 757 A1 ist eine optische Anordnung im Strahlengang einer zur Fluoreszenzanregung geeigneten Lichtquelle, vorzugsweise im Strahlengang eines konfokalen Laser-Scanning-Mikroskops, mit mindestens einem spektral selektiven Element zum Einkoppeln des Anregungslichts mindestens einer Lichtquelle in das Mikroskop und zum Ausblenden des am Objekt gestreuten und reflektierten Anregungslichts bzw. der Anregungswellenlänge aus dem über den Detektionsstrahlengang vom Objekt kommenden Lichts, bekannt. Die Anordnung ist zur variablen Ausgestaltung bei einfachster Konstruktion dadurch gekennzeichnet, dass durch das spektral selektive Element Anregungslicht unterschiedlicher Wellenlänge ausblendbar ist. Alternativ ist eine solche optische Anordnung dadurch gekennzeichnet, dass das spektral selektive Element auf die auszublendende Anregungswellenlänge einstellbar ist. Weiterhin ist in der genannten Schrift ausgeführt, dass das spektral selektive Element als AOTF (Acousto-Optical-Tunable-Filter) oder als AOD (Acousto-Optical-Deflector) ausgeführt sein kann.

Aus der Offenlegungsschrift DE 198 59 314 A1 ist eine Anordnung eines lichtbeugenden Elementes zur Separierung von Anregungs- und Emissionlicht in einem mikroskopischen Strahlengang, vorzugsweise in einem konfokalen Mikroskop, und insbesondere in einem Laser-Scanning-Mikroskop, bekannt, wobei das lichtbeugende Element sowohl vom Anregungslicht als auch vom Emissionslicht durchlaufen wird und mindestens eine Wellenlänge der Anregung durch Beugen beeinflusst, während andere von der Probe emittierte Wellenlängen das Element unbeeinflusst durchlaufen und dadurch räumlich vom Anregungslicht getrennt werden. Die Anordnung beinhaltet einen AOTF.

Die Europäische Patentanmeldung EP 1 085 362 A2 offenbart eine optische Anordnung für ein Laser-Scanning-Mikroskop. Das Laser-Scanning-Mikroskop umfasst mindestens eines auf die Wellenlänge des Anregungslichts einer Lichtquelle einstellbares spektrales selektives Element. Das spektrale selektive Element koppelt das Anregungslicht der Lichtquelle in das Mikroskop ein. Das an einem Objekt gestreute und reflektierte Anregungslicht aus dem Detektionsstrahlengang wird zumindest teilweise ausgeblendet und das vom Objekt kommende Detektionslicht wird durch das spektral selektive Element nicht ausgeblendet. Dem spektralselektiven Element ist ein weiteres optisches Bauteil nachgeordnet, nach dessen Durchlaufen die dispersiven und/oder doppelbrechenden Eigenschaften des Detektionslichts detektierbar sind.

Die bekannten Scanmikroskope haben gegenüber Scanmikroskopen, bei denen die Trennung von Beleuchtungs- und das Detektionslicht mit einem Strahlteiler realisiert ist, den Vorteil der spektralen Flexibilität, da das akustooptische Bauteil durch Ansteuerung mit Schallwellen unterschiedlicher Frequenz auf jede beliebige optische Wellenlänge für Beleuchtung bzw. Detektionslicht einstellbar ist. Darüber hinaus ist die spektrale Trennung bei diesen Scanmikroskopen um ein Vielfaches besser, als bei Scanmikroskopen mit Strahlteilern. Bei reflektierenden Proben ist auf Grund erhöhter Lichtleistungsverluste in den akustooptischen Bauteilen die Verwendung von Scanmikroskopen mit einem Strahlteiler, der beispielsweise als Neutralteiler ausgeführt sein kann, zu bevorzugen. Scanmikroskope mit Strahlteilern sind außerdem erheblich kostengünstiger.

Kommerzielle Scanmikroskope beinhalten meistens ein Mikroskopstativ, wie es auch in der konventionellen Lichtmikroskopie verwendet wird. In der Regel sind insbesondere konfokale Scanmikroskope auch als konventionelle Lichtmikroskope verwendbar. In der konventionellen Fluoreszenzauflichtmikroskopie wird aus dem Licht einer Lichtquelle, beispielsweise einer Bogenlampe, mit Hilfe eines Farbfilters, dem sog. Anregungsfilter, der Anteil in den mikroskopischen Strahlengang eingekoppelt, der den gewünschten Wellenlängenbereich zur Fluoreszenzanregung aufweist. Die Einkopplung in den Strahlengang des Mikroskops erfolgt mit Hilfe eines dichroitischen Strahlteilers, der das Anregungslicht zur Probe reflektiert, während er das von der Probe ausgehende Fluoreszenzlicht weitgehend ungehindert passieren lässt. Das von der Probe rückgestreute Anregungslicht wird mit einem Sperrfilter zurückgehalten, der für die Fluoreszenzstrahlung jedoch durchlässig ist. Die optimale Kombination aufeinander abgestimmter Filter und Strahlteiler zu einem leicht austauschbaren modularen Filterblock ist seit langem üblich. Meist sind die Filterblöcke in einem Revolver innerhalb des Mikroskops, als Teil sog. Fluoreszenz-Auftichtilluminatoren, angeordnet, so dass ein schneller und einfacher Austausch ermöglicht ist. Eine Fluoreszenzeinrichtung für Invers-Mikroskope, die eine Revolverhalterung für die Aufnahme von mehreren Fluoreszenzwürfeln enthält, welche auf einer Schublade drehbar gehaltert ist, ist beispielsweise in der deutschen Patentschrift DE 4404286 C2 beschrieben.

Der Erfindung liegt daher die Aufgabe zugrunde, ein Scanmikroskop vorzuschlagen, das universell einsetzbar ist und die Vorteile der unterschiedlichen bekannten Scanmikroskope bietet. Weiterhin soll das Scanmikroskop ohne oder allenfalls mit geringem Justieraufwand nachrüstbar sein.

Obige Aufgabe wird durch ein Scanmikroskop gelöst, das die Merkmale des Anspruchs 1 umfasst.

Die Erfindung hat neben dem Vorteil der Nachrüstbarkeit den weitem Vorteil der universellen Variierbarkeit der Leistung des Beleuchtungslichts mindestens einer beliebig auswählbaren Wellenlänge oder mindestens eines beliebig auswählbaren Wellenlängenbereichs, wobei auch eine verlustarme Reflexionsmikroskopie ermöglicht ist.

In einer bevorzugen Ausgestaltung des Scanmikroskops ist das akustooptische Bauteil als AOTF (acusto optical tunable filter) ausgestaltet. Eine Ausgestaltungsform mit einem AOD (akustooptischer Deflektor) ist realisierbar.

In der erfindungsgemäßen Ausgestaltung ist ein optisches Kompensationselement vorgesehen, das eine Doppelbrechung, die zu einer polarisationsabhängigen räumlichen Aufspaltung des Detektionslichtstrahles führt, des akustooptischen Bauteils kompensiert. Die Doppelbrechungseigenschaften sind auf die Kristallstruktur des akustooptischen Bauteils zurückzuführen. Durch die Anordnung der Grenzflächen weisen manche akustooptischen Bauteile eine ungewollte Prismenwirkung auf den Detektionslichtstrahl auf, die in der erfindungsgemäßen Ausgestaltung durch ein optisches Kompensationselement kompensiert ist. Die Prismenwirkung verursacht eine räumlich spektrale Aufspaltung des Detektionslichtstrahles. In der erfindungsgemäßen Ausführungsform Kompensiert das optische Kompensationselement sowohl eine ungewollte Prismenwirkung, als auch eine Doppelbrechung, da das optische Kompensationselement ein weiteres akustooptisches Bauteil ist. Das weitere akustooptische Bauteil und das erste akustooptische Bauteil weisen dabei die gleiche äußere Form und die gleiche Kristallstruktur auf. Das weitere akustooptische Bauteil und das erste akustooptische Bauteil sind bezüglich der Ausbreitungsrichtung des auf das erste akustooptische Bauteil treffenden Detektionslichtstrahls gegeneinander um 180 Grad verdreht orientiert. In der Regel ist das so orientierte weitere akustooptische Bauteil seitlich zu der durch die Ausbreitungsrichtung des auf das erste akustooptische Bauteil treffenden Detektionslichtstrahls definierten Achse versetzt, damit der Detektionslichtstrahl auf das weitere akustooptische Bauteil trifft. Der Abstand von ersten akustooptischem Bauteil zum weiteren akustooptische Bauteil ist in dieser Ausführung möglichst klein gewählt, um eine zu große räumliche Aufspaltung des Detektionslichtstrahls zwischen akustooptischem Bauteil und dem weiteren akustooptischen Bauteil zu vermeiden. Räumliche Aufspaltungen in der Größenordnung von einem halben Strahldurchmesser sind akzeptabel.

In einer anderen Ausgestaltung ist das weitere akustooptische Bauteil mit dem ersten akustooptischen Bauteil direkt oder über ein Zwischenbauteil verkittet.

Vorzugsweise beinhaltet das optische Modul Elemente zur Strahlführung und Elemente zur Strahlformung. Hierbei handelt es sich beispielsweise um Linsen, Spiegel, Gitter, Hohlspiegel und Glasblöcke. Insbesondere ist ein Ausgleich eines beim Durchlaufen des akustooptischen Bauteils entstehenden Strahlversatzes bzw. einer Strahlablage vorgesehen.

In einer anderen Ausführungsform ist eine Temperaturstabilisierung des ersten akustooptischen Bauteils bzw. des zweiten akustooptischen Bauteils vorgesehen. In einer weiteren Ausführungsvariante ist zur Vermeidung von Nachteilen durch Temperaturschwankungen oder von Schwankungen der Wellenlänge des Beleuchtungslichtstrahls vorgesehen, die Hochfrequenz in Abhängigkeit von der Temperatur zu steuern oder zu regeln. Eine andere Variante sieht in Verwirklichung dieses Ziels vor, die Wellenlänge des Beleuchtungslichtstrahles in Abhängigkeit von der Temperatur zu steuern oder zu regeln.

In einer bevorzugen Ausgestaltung ist ein Linemultiplexen vorgesehen, wobei eine Probenzeile mehrmals gescannt wird, jedoch immer mit Beleuchtungslicht einer anderen Wellenlänge beaufschlagt wird. Auch ein (automatisches) Umschalten der Wellenlänge des Beleuchtungslichtes für aufeinander folgende Probenzeilen ist möglich.

In einer ganz besonders bevorzugten Ausführungsform sind Führungs- und Anschlagelemente zur Positionierung des Moduls vorgesehen. Diese beinhalten beispielsweise Gleitschienen, Schwalbenschwanzführungen oder eine Bajonettfassung, die ein einfaches und zuverlässiges Einbringen und Positionieren ermöglichen. Weiterhin sind Anschlagelemente vorgesehen, die eine Arbeitsposition des Moduls im Beleuchtungs- und Detektionsstrahlengang definieren und die derart ausgestaltet sind, dass das positionierte Auskoppelelement automatisch in Bezug auf den Detektionsstrahlengang justiert ist und nach der Positionierung keine weitere Justierung des Auskoppelelements erforderlich ist.

In einer anderen Ausführungsform ist ein Revolver oder ein Schiebeschlitten, der mindestens eine Elementaufnahme aufweist, zur Positionierung des Moduls vorgesehen, wobei an oder in der Elementaufnahme das Modul derart angebracht ist, dass das Modul durch einfaches Drehen des Revolvers oder durch Schieben des Schiebeschlittens in dem Beleuchtungs- und Detektionsstrahlengang positionierbar ist. Eine Justierung des Moduls erfolgt nur einmalig beim Anbringen des Moduls in dem oder an dem Revolver oder Schiebeschlitten. Der weist vorzugsweise eine Einrastvorrichtung auf, die den Revolver oder den Schiebeschlitten lösbar fixiert, wenn das Modul in dem Beleuchtungs- und Detektionsstrahlengang positioniert ist. In einer weiteren Ausführungsvariante weist der Revolver oder der Schiebeschlitten mehrere Elementaufnahmen auf, in den Strahlteiler, die als dichroitische Strahlteiler, als Neutralteiler oder als Farbstrahlteiler ausgeführt sind, angebracht sind. Diese erfindungsgemäße Lösung ist hochflexibel, da das Modul und mehrere unterschiedliche Strahlteiler unterschiedlicher spektraler Eigenschaften bereit gehalten werden und einfach ausgetauscht werden können.

In einer besonders vorteilhaften Ausgestaltung weisen der aus dem Modul ausgekoppelte Beleuchtungslichtstrahl und der aus dem Modul ausgekoppelte Detektionslichtstrahl parallele optische Achsen auf. Diese Ausgestaltung vereinfacht die Auswechselbarkeit mit auf planparallelen Substraten basierenden Strahlteilern.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: Ein erfindungsgemäßes optisches Element,
- Fig.2: ein erfindungsgemäßes Scanmikroskop,
- Fig. 3: grafisch die spektralen Eigenschaften zweier optischer Elemente
- Fig. 4: ein erfindungsgemäßes optisches Element und
- Fig. 5: ein weiteres optisches Element.

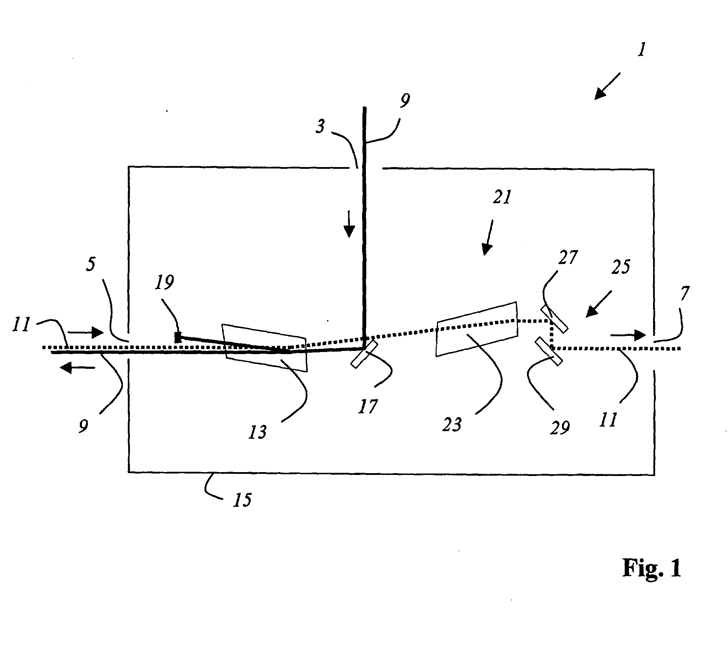

Fig. 1 zeigt ein erfindungsgemäßes optisches Element 1. Das optische Element 1 weist einen ersten Port 3, einen zweiten Port 5, und einen dritten Port 7 auf, wobei dem ersten Port 3 ein Beleuchtungslichtstrahl 9 einkoppelt ist, an dem zweiten Port 5 der Beleuchtungslichtstrahl 9 auskoppelt ist und ein Detektionslichtstrahl 11 einkoppelt ist und an den dritten Port 7 der Detektionslichtstrahl 11 auskoppelt ist. Das optische Element 1 beinhaltet ein erstes akustooptisches Bauteil 13 und ist als austauschbares Modul mit einem Gehäuse 15 ausgestaltet. Der einfallende Beleuchtungslichtstrahl 9 wird von einem Umlenkspiegel 17 auf das erste akustooptische Bauteil 13 gelenkt. Das akustooptische Bauteil 13 ist als AOTF ausgestaltet, der von einer akustischen Welle durchlaufen ist. Die akustische Welle wird von einem der elektrisch angesteuerten Piezo-Schallerzeuger generiert. Die Frequenz der akustische Welle wird so gewählt, dass nur die Anteile der gewünschten Wellenlänge des Beleuchtungslichtstrahls 9 in Richtung des zweiten Ports 5 gelenkt werden. Die übrigen, von der akustischen Anregung nicht beeinflussten Anteile des Beleuchtungslichtstrahls 9 werden in eine Strahlfalle 19 gelenkt. Durch Variation der Amplitude der akustischen Welle ist die Leistung des aus dem zweiten Port 5 austretenden Beleuchtungslichtstrahls 9 auswählbar, was insbesondere bei reflexionsmikroskopischen Anwendungen von besonderem Vorteil ist. Kristallschnitt und Orientierung des akustooptischen Bauteils 13 sind dabei so gewählt, dass bei gleicher Einkoppelrichtung verschiedene Wellenlängen in die gleiche Richtung abgelenkt werden.

Mit dem optischen Element 1 ist die Variierung der Leistung des Beleuchtungslichtstrahls 9, die Variierung der Leistung mindestens einer auswählbaren Wellenlänge oder mindestens eines auswählbaren Wellenlängenbereichs des Beleuchtungslichtstrahls 9 und auch die vollständige Ausblendung auswählbarer Wellenlängen oder auswählbarer Wellenlängenbereiche ermöglicht. Der Detektionslichtstrahl 11, der in der Zeichnung gestrichelt dargestellt ist, trifft mit entgegengesetzter Ausbreitungsrichtung zum Beleuchtungslichtstrahls 9 auf das akustooptische Bauteil 13. Die Anteile des Detektionslichtstrahl 11 mit gleicher Wellenlänge und Polarisation wie die des Beleuchtungslichtstrahls 9 werden je nach Amplitude der akustischen Welle vollständig oder teilweise auf den Umlenkspiegel 17 und anschließend zum ersten Port 3 gelenkt; bei verminderter Amplitude gelangt der unbeeinflusste Anteil an dem Umlenkspiegel 17 vorbei. Handelt es sich bei dem Detektionslichtstrahl 11 beispielsweise um Reflexionslicht, so wirkt das optische Element 1 wie ein variabler Neutralstrahlteiler, dessen Teilungsverhältnis durch die Amplitude der akustischen Welle bestimmt ist. Handelt es sich bei dem Detektionslichtstrahl 11 um Fluoreszenzlicht, das z.B. aufgrund der Stokes-oder Ramanverschiebung in der Wellenlänge verändert ist, wird dieses von der akustischen Welle nicht beeinflusst und gelangt am Umlenkspiegel 17 vorbei. Aufgrund der Doppelbrechung des akustooptischen Bauteils 13 ist der Detektionslichtstrahl 11 in einen ordentlich und einen außerordentlich polarisierten Strahl aufgespalten. Außerdem sind jeweils der ordentlich und der außerordentlich polarisierte Strahl aufgrund der Prismenwirkung des akustooptischen Bauteils 13 auch spektral aufgefächert. Zur Kompensation ist ein optisches Kompensationselement 21, das aus einem weiteren akustooptischen Bauteil 23 besteht, vorgesehen. Das weitere akustooptische Bauteil 23 entspricht im Aufbau dem ersten akustooptischen Bauteil 13. Es ist um 180 Grad um die Strahlachse von 13 gedreht angeordnet. Dadurch werden die aufgefächerten Teilstrahlen unterschiedlicher Polarisationsrichtung wieder vereinigt. Gleichzeitig wird die spektrale Auffächerung des ersten akustooptischen Bauteils 13 rückgängig gemacht. Es verbleibt allenfalls ein geringer Parallelversatz für Detektionslicht unterschiedlicher Wellenlängen. Nach Durchlaufen des weiteren akustooptischen Bauteils 23 trifft der Detektionslichtstrahl 11 auf ein Spiegelpaar 25 aus einem ersten Spiegel 27 und einem zweiten Spiegel 29. Das Spiegelpaar 25 dient dazu, den Detektionslichtstrahl 11 auf die gewünschte Strahlachse, nämlich die Strahlachse, die der durch den zweiten Port 5 eintretende Detektionslichtstrahles 11 aufweist, zu bringen. Dies vereinfacht die Austauschbarkeit des optischen Elements 1 gegen ein Element mit einem konventionellen Strahlteiler. Ebenso, wie der Beleuchtungslichtstrahl 9 kann der Detektionslichtstrahl 11 mit dem ersten akustooptischen Bauteil 13 oder auch mit dem weiteren akustooptischen Bauteil 23 spektral selektiv in der Leistung variiert werden.

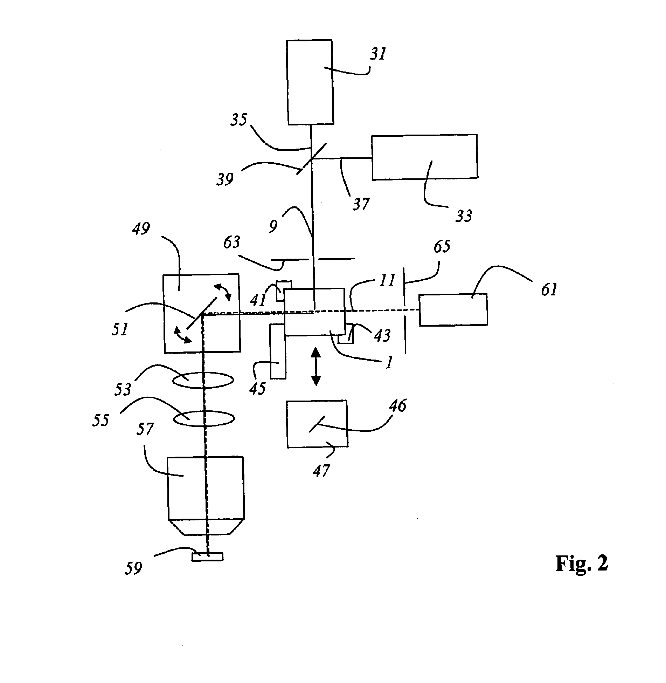

Fig. 2 zeigt ein erfindungsgemäßes Scanmikroskop, das als konfokales Scanmikroskop ausgeführt ist, mit zwei Lasern 31, 33, deren Emissionslichtstrahlen 35, 37, die unterschiedliche Wellenlängen aufweisen, mit dem dichroitischen Strahlvereiniger 39 zu einem Beleuchtungslichtstrahl 9 vereinigt werden. Das Scanmikroskop weist Anschlagelemente 41, 43 auf, die eine Arbeitsposition für ein optisches Element 1 und ein weiteres optisches Element 47, die wahlweise in diese Arbeitsposition einbringbar sind, definieren und die Positionierung ermöglichen, ohne dass eine Justierung erforderlich ist. Außerdem ist ein Führungselement 45, das als Schwalbenschanzführung ausgebildet ist, vorgesehen. Das optische Element 1 entspricht dem in Fig. 1 illustrierten optischen Element. Das weitere optische Element 47 beinhaltet einen dichroitischen Strahlteiler 46 zur Separierung von Beleuchtungs- und Detektionsstrahlengang. Das jeweils in die Arbeitsposition eingebrachte optische Element lenkt den beeinflussten oder unbeeinflussten Beleuchtungslichtstrahl 9 auf eine Strahlablenkeinrichtung 49, die einen kardanisch aufgehängten Scanspiegel 51 beinhaltet, und den Beleuchtungslichtstrahl 9 durch die Scanoptik 53, die Tubusoptik 55 und das Objektiv 57 über bzw. durch die Probe 59 führt. Der von der Probe kommende Detektionslichtstrahl 11 durchläuft in umgekehrter Richtung die Scanoptik 53, die Tubusoptik 55 und das Objektiv 57 und gelangt über den Scanspiegel 51 zum optischen Element 1, 47, das den Detektionslichtstrahl 11 dem Detektor 61, der als Multibanddetektor ausgeführt ist, zuleitet. Das bei einem konfokalen Scanmikroskop üblicherweise vorgesehene Beleuchtungspinhole 63 und das Detektionspinhole 65 sind der Vollständigkeit halber schematisch eingezeichnet. Weggelassen sind wegen der besseren Anschaulichkeit hingegen einige optische Elemente zur Führung und Formung der Lichtstrahlen, sowie die Treiber und Zuleitungen für die akustooptischen Bauteile. Diese sind einem auf diesem Gebiet tätigen Fachmann hinlänglich bekannt.

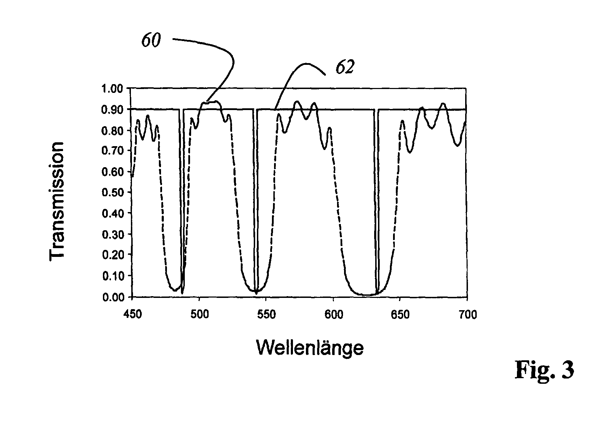

Fig. 3 zeigt grafisch die spektralen Eigenschaften eines optischen Elements mit einem dichroitischen Strahlteiler (Kurve mit Bezugszeichen 60) im Vergleich zu einem optischen Element mit einem akustooptischen Bauteil (Kurve mit Bezugszeichen 62). Beim Strahlteiler handelt es sich um einen dreifach Dichroiten, der für die Anregungswellenlängen 488nm, 543nm, 633nm optimiert wurde. Für diese Wellenlängen wird eine hohe Reflektivität und entsprechend geringe Transmission benötigt. Für eine effiziente Fluoreszenzdetektion wird im restlichen Wellenlängenbereich oberhalb der Anregungslinien eine hohe Transmission gefordert. Die detektierbare Fluoreszenz-Lichtleistung ergibt sich aus der Integration des Produkts von Strahlteiler-Transmission und Fluoreszenzspektrum über den interessierenden Wellenlängenbereich. Das Transmissionsspektrum eines optischen Element mit einem akustooptischen Bauteil, welcher auf die gleichen Anregungswellenlängen 488nm, 543nm, 633nm eingestellt ist, ist dargestellt.

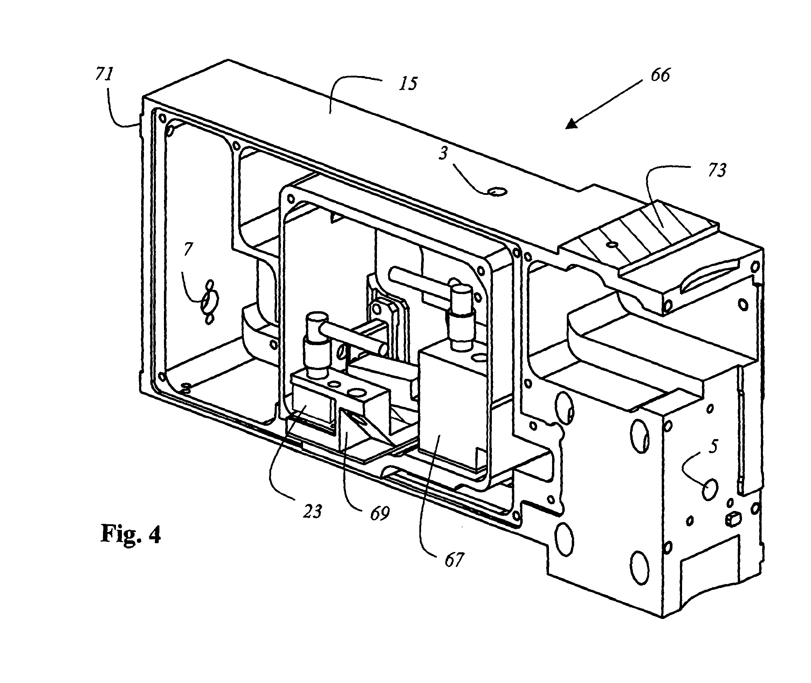

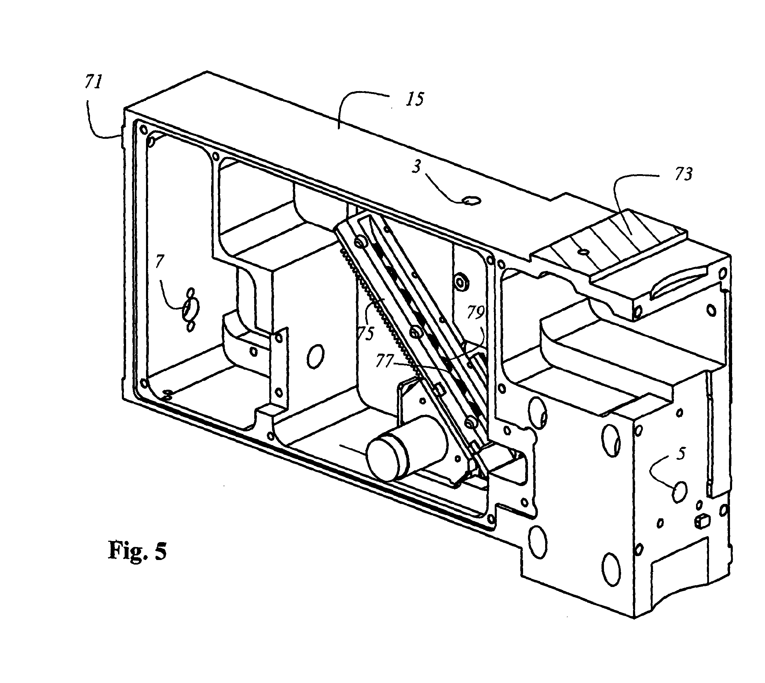

Fig. 4 zeigt ein erfindungsgemäßes Modul 66 mit einem ersten akustooptischen Bauteil, das in dieser Ansicht von seiner Halterung 67 verdeckt ist, und mit einem weiteren akustooptischen Bauteil 23, das in einer Halterung 69 angeordnet ist. Das Modul weist ein Gehäuse 15, einen ersten Port 3, einen zweiten Port 5, und einen dritten Port 7 auf, wobei dem ersten Port 3 ein Beleuchtungslichtstrahl 9 einkoppelt ist, an dem zweiten Port 5 der Beleuchtungslichtstrahl 9 auskoppelt ist und ein Detektionslichtstrahl 11 einkoppelt ist und an den dritten Port 7 der Detektionslichtstrahl 11 auskoppelt ist. Weiterhin sind Anschlagflächen 71, 73 zur exakten Positionierung vorgesehen. Das Modul ist einfach und ohne Justieraufwand in ein optisches Gerät, beispielsweise ein Scanmikroskop oder ein Durchflusszytometer einbringbar und beispielsweise gegen das in Fig. 5 gezeigte optische Element austauschbar.

Fig. 5 zeigt ein optisches Element, das mit einem Schiebeschlitten 75, in dem mehrere Strahlteiler 77, 79 bevorratet sind, ausgerüstet ist und dessen Gehäuse 15 dieselbe Form aufweist, wie die des in Fig. 4 gezeigten Moduls. Das optische Element ist einfach und ohne Justieraufwand in ein optisches Gerät, beispielsweise ein Scanmikroskop oder ein Flußzytometer einbringbar und beispielsweise gegen das in Fig. 4 gezeigte optische Element austauschbar.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: optisches Element
- 3: erster Port
- 5: zweiter Port
- 7: dritter Port
- 9: Beleuchtungslichtstrahl
- 11: Detektionslichtstrahl
- 13: erstes akustooptisches Bauteil
- 15: Gehäuse
- 17: Umlenkspiegel
- 21: optisches Kompensationselement
- 23: weiteres akustooptisches Bauteil
- 25: Spiegelpaar
- 27: erster Spiegel
- 29: zweiter Spiegel
- 31: Laser
- 33: Laser
- 35: Emissionslichtstrahl
- 37: Emissionslichtstrahl
- 39: dichroitischer Strahlvereiniger
- 41: Anschlagelement
- 43: Anschlagelement
- 45: Führungselement
- 46: Strahlteiler
- 47: weiteres optisches Element
- 49: Strahlablenkeinrichtung
- **51**: Scanspiegel
- 53: Scanoptik
- 55: Tubusoptik
- 57: Objektiv
- 59: Probe
- 61: Detektor
- 63: Beleuchtungspinhole
- 65: Detektionspinhole
- 67: Halterung
- 69: Halterung
- 71: Anschlagfläche
- 73: Anschlagfläche
- 75: Schiebeschlitten

## Patentansprüche

1. Scanmikroskop, das einen Beleuchtungs- und einen Detektionsstrahlengang festlegt, mit einem Objektiv (57), das sowohl im Beleuchtungs- und Detektionsstrahlengang des Scanmikroskops angeordnet ist, wobei im Beleuchtungs- und im Detektionslichtstrahl (9, 11) ein erstes akustooptisches Bauteil (13) vorgesehen ist, das den Beleuchtungs- und den Detektionsstrahlengang in einer festen Winkelbeziehung zueinander separiert, und wobei im Detektionsstrahlengang ein weiteres akustooptisches Bauteil als Kompensationselement (21) angeordnet ist, das eine Doppelbrechung und eine Prismenwirkung des akustooptischen Bauteils (13) kompensiert, **dadurch gekennzeichnet, dass** das mindestens eine erste akustooptische Bauteil (13) und das Kompensationselement (21) in einem Modul (66), das ein Gehäuse (15) besitzt, angeordnet sind, dass das erste akustooptische Bauteil (13) und das weitere akustooptische Bauteil (21) den gleichen Aufbau besitzen, und dass das weitere akustooptische Bauteil (21) gegenüber dem ersten akustooptischen Bauteil (13) um 180° gedreht angeordnet ist.

2. Scanmikroskop nach Anspruch 1, **dadurch gekennzeichnet, dass** der Abstand des weiteren akustooptischen Bauteils (23) vom ersten akustooptischen Bauteil (13) so klein ist, das eine vom ersten akustooptischen Bauteils (13) verursachte spektrale Aufspaltung des sich entlang des Detektionsstrahlengangs ausbreitenden Detektionslichtbündels am weiteren akustooptischen Bauteil (23) kleiner ist als die Hälfte des Durchmessers des unaufgespaltenen Detektionslichtbündels.

3. Scanmikroskop nach Anspruch 1, **dadurch gekennzeichnet, dass** das Scanmikroskop mit Führungselementen (46) und Anschlagelementen (41, 43) versehen ist und dass das Gehäuse (15) des Moduls (66) Anschlagflächen zur exakten Positionierung des Moduls (66)im Scanmikroskop aufweist.

4. Scanmikroskop nach Anspruch 1, **dadurch gekennzeichnet, dass** das Gehäuse mindestens drei Ports (3, 5, 7) aufweist, wobei an einem ersten Port (3) der Beleuchtungslichtstrahl (9) einkoppelbar ist, an einem zweiten Port (5) der Beleuchtungslichtstrahl (9) auskoppelbar ist und ein Detektionslichtstrahl (11) einkoppelbar ist und an einem dritten Port (7) der Detektionslichtstrahl (11) auskoppelbar ist.

5. Scanmikroskop nach Anspruch 4, **dadurch gekennzeichnet, dass** der ausgekoppelte Beleuchtungslichtstrahl (9) und der ausgekoppelte Detektionslichtstrahl (11) parallele optische Achsen aufweisen.

## Claims

1. Scanning microscope that defines an illumination beam path and a detection beam path, comprising an objective (57), which is arranged in both the illumination beam path and the detection beam path, a first acousto-optical component (31), which separates the illumination beam path and the detection beam path at a fixed angular relationship to one another, being provided in the illumination beam path and the detection beam path (9, 11), and a further acousto-optical component, which compensates for a double refraction and prismatic effect of the acousto-optical component (13), being arranged as compensation element (21) in the detection beam path, **characterized in that** at least one first acousto-optical component (13) and the compensation element (21) are arranged in a module (66), which has a housing (15), that the first acousto-optical component (13) and the further acousto-optical component (21) are of the same construction, and that the further acousto-optical component (21) is rotated by 180° in its arrangement relative to the first acousto-optical component (13).

2. Scanning microscope according to Claim 1, **characterised in that** the distance of the further acousto-optical component (21) from the first acousto-optical component (13) is so small that a spectral splitting, caused by the first acousto-optical component (13), of a detection light bundle extending along the detection beam path is smaller at the further acousto-optical component (21) than half the diameter of the unsplitted detection light bundle.

3. Scanning microscope according to Claim 1, **characterised in that** the scanning microscope is provided with guide elements (46) and stop elements (41, 43), and that the housing (15) of the module (66) has stop faces for precise positioning of the module (66) in the scanning microscope.

4. Scanning microscope according to Claim 1, **characterised in that** the housing has at least three ports (3, 5, 7), such that the illuminating light beam (9) can be coupled in at a first port (3), the illuminating light beam (9) can be coupled out and a detection light beam (11) can be coupled in at a second port (5), and the detection light beam (11) can be coupled out at a third port (7).

5. Scanning microscope according to Claim 4, **characterised in that** the illuminating light beam (9) coupled out and the detection light beam (11) coupled out have parallel optical axes.

## Revendications

1. Microscope à balayage qui définit un trajet de faisceau d'éclairage et un trajet de faisceau de détection, avec un objectif (57) qui est disposé aussi bien dans le trajet de faisceau d'éclairage que dans le trajet de faisceau de détection, étant donné qu'est prévu dans le trajet de faisceau d'éclairage et le trajet de faisceau de détection (9, 11) un premier composant acousto-optique (13) qui sépare le trajet de faisceau d'éclairage et le trajet de faisceau de détection en un angle fixe l'un par rapport à l'autre, et étant donné qu'est disposé dans le trajet de faisceau de détection un autre composant acousto-optique comme élément de compensation (21) qui compense une double diffraction et un effet de prisme du composant acousto-optique (13), **caractérisé en ce que** au moins le premier composant acousto-optique (13) et l'élément de compensation (21) sont disposés dans un module (66) qui comporte un boîtier (15), **en ce que** le premier composant acousto-optique (13) et l'autre composant acousto-optique (21) ont la même construction, et **en ce que** l'autre composant acousto-optique (21) est disposé tourné de 180° par rapport au premier composant acousto-optique (13).

2. Microscope à balayage selon la revendication 1, **caractérisé en ce que** la distance de l'autre composant acousto-optique (21) au premier composant acousto-optique (13) est si petite que la séparation spectrale, causée par le premier composant acousto-optique (13), du faisceau lumineux de détection qui se propage le long du trajet de faisceau lumineux est plus petit sur l'autre composant acousto-optique (21) que la moitié du diamètre du faisceau lumineux de détection non séparé.

3. Microscope à balayage selon la revendication 1, **caractérisé en ce que** le microscope à balayage est doté d'éléments de guidage (46) et d'éléments de butée (41, 43), et **en ce que** le boîtier (15) du module (66) présente des surfaces de butée pour le positionnement exact du module (66) dans le microscope à balayage.

4. Microscope à balayage selon la revendication 1, **caractérisé en ce que** le boîtier présente au moins trois ports (3, 5, 7), étant donné que le rayon lumineux d'éclairage (9) peut être couplé à un premier port (3), et le rayon lumineux d'éclairage (9) peut être découplé et un rayon lumineux de détection (11) couplé à un deuxième port (5), et le rayon lumineux de détection (11) peut être découplé à un troisième port (7).

5. Microscope à balayage selon la revendication 4, **caractérisé en ce que** le rayon lumineux d'éclairage (9) découplé et le rayon lumineux de détection (11) découplé présentent des axes optiques parallèles.
